# EUROPEAN PATENT SPECIFICATION

(11) **EP 2 061 853 B1**
(45) Date of publication and mention of the grant of the patent: **25.05.2011**
(21) Application number: 07837431.1
(22) Date of filing: 29.08.2007
(51) Int. Cl.: C09K 3/14, C09G 1/02

(54) **CONCENTRATED ABRASIVE SLURRY COMPOSITIONS, METHODS OF PRODUCTION, AND METHODS OF USE THEREOF**
KONZENTRIERTE ABRASIVE SCHLAMMZUSAMMENSETZUNGEN, VERFAHREN ZU IHRER HERSTELLUNG SOWIE VERFAHREN ZU IHRER VERWENDUNG
COMPOSITIONS DE BOUES ABRASIVES CONCENTRÉES, PROCÉDÉS DE PRODUCTION ET PROCÉDÉS D'UTILISATION DE CELLES-CI

(30) Priority: 30.08.2006 US 841423 P
(43) Date of publication of application: 27.05.2009
(73) Proprietor: Saint-Gobain Ceramics and Plastics, Inc., Worcester, MA 01615-0138 (US)
(72) Inventor: BAKSHI, Abhaya K., Westford, Massachusetts 01886 (US); SHERLOCK, Jason A., Anaheim, California 92807 (US)
(74) Representative: Zimmermann & Partner
(86) International application number: PCT/US2007/018910
(87) International publication number: WO 2008/027373

(56) References cited:
- CH-A- 404 835
- JP-A- 10 324 889
- US-A- 3 462 251
- US-A- 4 867 757
- US-A1- 2005 239 381
- US-B1- 6 602 834

## Description

### BACKGROUND

### 1. Field of the Invention.

The present invention generally relates to concentrated slurry compositions for use in loose-abrasive machining processes, and, more particularly, to concentrated abrasive slurries for use in wire saw processes.

### 2. Background

Wire saws are extensively used to slice silicon for solar and electronics applications. They are also used for slicing a variety of other materials including sapphire, GaAs, InP, SiC, quartz, and glass.

A wire saw generally includes a plurality of wires oriented under tension. The wires are driven simultaneously as an abrasive slurry is supplied between the wires and workpiece. The workpiece is forced through the wires as the slurry acts to abrade the workpiece into a plurality of pieces. This method allows for the production of large numbers of sliced pieces of particular thickness, flatness, and surface smoothness.

The slurry is a suspension of abrasive particles in a liquid called a "vehicle" or "carrier". As the abrasives, materials such as silicon carbide (SiC), diamond, and boron carbide (B₄C) have been used. Certain vehicles have been employed for these abrasive slurries.

During wire saw cutting, the wire does not do the cutting, but rather it acts to transport the abrasive slurry, which does the cutting. This type of process is called "loose-abrasive machining." Other examples of loose-abrasive machining include slurry based lapping and polishing, ultrasonic machining, water-jet cutting, and sandblasting.

The slurry used in loose-abrasive machining processes can be significantly determinative of the results obtained. As such, high quality abrasives and vehicles are generally selected. To supply the abrasive particles to the workpiece and provide certain cutting performance, the abrasive particles are preferably stably and uniformly dispersed in the vehicle, and the slurry vehicle has a viscosity that allows it to hold the abrasive particles to the wire.

Typically, wire saw operators buy the abrasive particles and the fluid vehicle separately and mix the components on site to prepare the slurry. However, if the abrasives and vehicles are mixed incorrectly or incompletely, the resulting slurries will not possess the properties necessary for the desired cutting performance. Further, unless proper equipment and dust collection systems are used, mixture of the slurry components on site exposes the operators to a dusty environment. The slurry preparation step also takes productive work hours away from the operators' core function of machining and slicing wafers.

Another option is to use premixed slurries rather than mixing slurry components on site. While premixed slurries provide some benefits over mixing slurry components on site, it has been found that the solids in premixed slurries have a tendency to settle out from the slurries during handling, storage, and transportation. This can result in a hard pack at the bottom of the slurry container, which is often difficult to re-suspend. Incomplete re-suspension results in a dilute slurry, which has diminished cutting ability. One attempt to address this problem involves the addition of complex viscosity modifiers to the slurry. However, the addition of viscosity modifiers can dilute the slurry and can interfere with the cutting performance of the slurry and loss in productivity. It has also been proposed to ship premixed slurries in mixing tanks similar to cement mixing trucks to prevent settling out of solids. However, shipment using mixing tanks is limited by cost and travel distance, and further requires that the slurry be prepared in close vicinity to the shipping location. It is also generally less expensive to purchase slurry components locally rather than at the shipping location and, thus, premixed slurries are often more expensive to purchase.

US 6,602,834 B1 describes a cutting and lubricating composition with abrasive particles for cutting hard and brittle workpieces with a wire saw or other cutting or grinding tool. The composition provides electrostatic and steric repulsion between the abrasive particles to maintain the particles in suspension without forming hard settled cakes from suspension "fall-out".

From US 2005/0239381 A1 there are known an abrasive composition and methods of use of these compositions for the preparation of surfaces for the application of various coatings such as paints, lacquers and varnishes. The abrasive compositions provide rapid cleaning and dulling of the underlying surface rendering it suitable for the application of paints or other finishes.

JP 10 324889 A describes a water-soluble cutting fluid which causes abrasive grains to be dispersed stably, improves the adhesion of abrasive grains to a wire saw, is prevented from gelling, retains lubricity, and enables uniform and efficient cutting by compounding a water-soluble solvent with hectorite having a specific composition, a poylcarboxylate, a nonionic surfactant and water. Hectorite (A) having a particle size of 10-200 nm is used. The polycarboxylate (B) can be one represented by the formula -[CₙH₂ₙ-CH(COOM)-CH(COOM)]-ₘ (M is an alkali metal or NH₄; n is 2 - 10; and m is 10 - 1,000). An ethylene oxide adduct of castor oil is an example of the nonionic surfactant. Ingredient (A) is compounded in an amount of 0.2 - 2 wt.%; ingredient (B) is compounded in an amount of 0.001 - 0.2 wt.%; ingredient (C) is compounded in an amount of 0 - 10 wt.%, and water is compounded in an amount of 2 - 30 wt.%. Polyethylene glycol is an example of a water-soluble solvent. The viscosity of the fluid is adjusted to 10- 1,000 cP. A workpiece is cut by using a fluid comprising the cutting fluid and abrasive grains (e.g. SiC-made abrasive grains) in a ratio of (1:1)-(1:1.5).

Given these and other deficiencies observed in the art, it would be highly desirable to provide improved slurry compositions.

### SUMMARY

This invention provides a concentrated slurry composition for use in loose-abrasive machining processes. The concentrated slurry can be diluted on site to provide a working slurry composition. Slurry compositions of the invention are particularly useful in wire saw cutting applications.

The present invention refers to a concentrated abrasive slurry composition comprising at least 30 vol% abrasive particles, whereby the abrasive particles have an average particle size of up to about 3000 nm, and a vehicle comprising mineral oil or one or more water soluble glycols. The mineral oil or water soluble glycols are present in the concentrated abrasive slurry composition in amounts ranging from about 15 vol% to about 70 vol%.

The present invention furthermore relates to a method for forming a concentrated slurry composition comprising the step mixing at least 30 vol% abrasive particles, the abrasive particles having an average particle size of up to about 3000 nm, with a vehicle comprising between about 15 vol% and 70 vol% of mineral oil or one or more water soluble glycols.

Furthermore, the present invention refers to a method for using the concentrated abrasive slurry composition defined above for a loose-abrasive machining process comprising the steps (i) providing the concentrated abrasive slurry; (ii) diluting the concentrated abrasive slurry with water and/or one or more water soluble glycol to form a working slurry; and (iii) supplying the working slurry to the loose-abrasive machining process.

The term "concentrated," as used herein to describe the slurry compositions, is intended to refer to any slurry composition that contains abrasive particles dispersed within a vehicle, wherein the abrasive particles are present at a concentration higher than that usable for a given loose-abrasive machining process. By simply adding water and/or glycols or mineral oil to the concentrated slurry composition, the concentrated slurry is diluted and is converted to a working slurry composition. As used herein, a "working slurry composition" is any slurry composition that contains abrasive particles dispersed within a vehicle, wherein the abrasive particles are present at a concentration that is suitable for a given loose-abrasive machining process.

In one aspect, the invention generally relates to a concentrated abrasive slurry composition comprising at least 30 vol% abrasive particles and a vehicle comprising mineral oil or one or more water soluble glycols. The mineral oil or water soluble glycols are present in the concentrated abrasive slurry composition in amounts ranging from about 15 vol% to about 70 vol%. In some embodiments, the abrasive particles can be uniformly dispersed within the vehicle, and can remain uniformly dispersed within the vehicle without settling out for at least 30 days. As used herein, "uniformly dispersed'' is understood to mean that the abrasive particles are distributed evenly throughout the vehicle. As used herein, "settling out" is understood to mean that, at room temperature, the abrasive particles are not stable in the vehicle, resulting in the abrasive particles forming a sediment at the bottom of the container. The abrasive particles can be said to have "settled out'' if, at room temperature, at least about 50% of the abrasive particles in the composition form a sediment (naked eye detection) at the bottom of the container.

Embodiments according to this aspect of the invention can include the following features. The abrasive particles can be selected from any conventional abrasive particles used in loose-abrasive slurries, including silicon carbide, alumina, diamond, and boron carbide. The composition can contain from about 30 vol% to about 80 vol% abrasive particles, from about 40 vol% to about 70 vol% abrasive particles, or from about 50 vol% to about 60 vol% abrasive particles. The composition can be a nonaqueous composition, and the vehicle can comprise mineral oil. The composition can be water soluble, and the vehicle can comprise water soluble glycols, such as polyethylene glycol. The vehicle can further comprise water. Addition of water is such that the total solids content of the concentrated slurry composition is at least about 30 vol%. In some embodiments, the composition contains up to about 20 vol% water, and in some embodiments, from about 2 vol% to about 15 vol% water. The vehicle can further comprise one or more viscosity modifier. The viscosity modifiers can be selected from conventional viscosity modifiers such as synthetic clay, natural clay, Carbopols®, carboxymethylcellulose. ethylcellulose, gelatin, hydroxyethylcellulose, hydroxypropyl cellulose, methylcellulose, polyvinyl alcohol, and xanthan gum. The viscosity modifiers can be added so as to provide a composition having a viscosity ranging from about 400 centipoise to about 10000 centipoise. In some embodiments, the composition contains up to about 5 vol% of one or more viscosity modifier. The vehicle can further comprise one or more activator(s). The activators can be selected from conventional activators such as triethanolamine and amine borates. In some embodiments, the composition contains up to about 3 vol% of one or more activator. The vehicle can further comprise up to about 2 vol% of one or more fungicide. The vehicle can further comprise up to about 2 vol% of one or more biocide. The vehicle can further comprise up to about 5 vol% of one or more rust inhibitor. In some embodiments, the concentrated slurry composition comprises at least 30 vol% SiC, 15- 60 vol% PEG, up to 20 vol% water, up to 5 vol% of one or more viscosity modifier, up to 3 vol% of one or more activator, up to 2 vol% of one or more fungicide, up to 2 vol% of one or more biocide, and up to 5 vol% of one or more rust inhibitor.

In a preferred aspect, nano-size abrasive materials may be employed in the compositions of the invention. Among other things, nano-sized abrasive-materials (e.g. SiC, alumina, etc.) may be more readily dispersed and retained in a fluid composition (i.e. not precipitating over time). Suitable nano-sized abrasive materials for use if the compositions of the invention include those that have an average particle size of up to about 1000, 1500, 2000 or 3000 nanometers, with materials that have an average particle size of from about 50 to 2000 nanometers or 50 or 100 to 1000 or 1500 nanometers being suitable for many applications. Other embodiments may have even finer average particle sizes of the abrasive materials, such as not greater than about 800 nanometers, 750 nanometers, 600 nanometers, 500 nanometers, 400 nanometers, and even particles having an average particle size smaller than 300 nanometers, representing a fine particulate material. Due to process constraints of certain embodiments, the smallest average particle size may be limited, such as not less than about 50, 75 or 100 nanometers.

As used herein, the "average particle size" is used to denote the average longest or length dimension of the abrasive materials. Due to the elongated morphology of some materials, conventional characterization technology can be inadequate to measure average particle size, since characterization technology is generally based upon an assumption that the particles are spherical or near-spherical. Accordingly, average particle size can be determined by taking multiple representative samples and physically measuring the particle sizes found in representative samples. Such samples may be taken by various characterization techniques, such as by scanning electron microscopy (SEM). The term average particle size also denotes primary particle size, related to the individually identifiable particles, whether dispersed or agglomerated forms.

As referred to herein, viscosity values are as determined at 25°C. Suitably, viscosity values are measured using a Brookfield spindle (e.g. #2 or #4) at 60 rpm.

As mentioned, preferred abrasive materials of compositions of the invention may comprise alumina including alpha-alumina as well as transitional forms of alumina which include gamma-alumina, delta-alumina and theta-alumina. Suitable alumina abrasive materials may be suitably provided by alumina precursors including boehmite. Thus, in a suitable preparation, a boehmite precursor and boehmite seeds are provided in a suspension, followed by heat treating (such as by hydrothermal treatment) the suspension (alternatively sol or slurry) to convert the boehmite precursor into boehmite particulate material, e.g. formed of particles or crystallites. Heat treatment is then carried out to the boehmite particulate material to effect polymorphic transformation into alumina. The term "boehmite" is generally used herein to denote alumina hydrates including mineral boehmite, typically being Al₂O₃.H₂O and having a water content on the order of 15%, as well as psuedoboehmite, having a water content higher than 15%, such as 20-38% by weight. It is noted that boehmite (including psuedoboehmite) has a particular and identifiable crystal structure, and accordingly unique X-ray diffraction pattern, and as such, is distinguished from other aluminous materials including other hydrated aluminas such as ATH (aluminum trihydroxide) a common precursor material that can be used for the fabrication of boehmite particulate materials. Boehmite and alumina materials are disclosed in U.S. Patent Application Publications 2003/0197300; 2004/0265219; and 2006/0104895, all incorporated herein by reference in their entirety.

In another aspect, the invention generally relates to a concentrated abrasive slurry composition for use in loose-abrasive machining processes comprising at least 30 vol% abrasive particles and between about 15 vol% and 70 vol% polyethylene glycol. The concentrated abrasive slurry is convertible to a working slurry by the addition of water and/or additional polyethylene glycol.

In another aspect, the invention generally relates to a concentrated wire saw slurry comprising abrasive particles uniformly dispersed within a vehicle comprising mineral oil or one or more water soluble glycol. The slurry contains at least 30 vol% abrasive particles, and the slurry is convertible to a working wire saw slurry by the addition of water and/or one or more water soluble glycols, or by the addition of mineral oil.

In another aspect, the invention generally relates to a method for forming a concentrated slurry composition comprising mixing at least 30 vol% abrasive particles with a vehicle comprising between about 15 vol% and 70 vol% of mineral oil or one or more water soluble glycols.

Embodiments according to this aspect of the invention can include the following features. The abrasive particles can be mixed with the vehicle such that they are uniformly dispersed within the vehicle, and such that the abrasive particles remain uniformly dispersed within the vehicle without settling out for at least 30 days. The vehicle can comprise a water soluble glycol. The vehicle can further comprises water. The method can further comprise mixing water with the water soluble glycol prior to mixing the abrasive particles with the vehicle. The vehicle can further comprises one or more viscosity modifier, one or more activator, one or more fungicide, one or more biocide, and/or one or more rust inhibitor, and the method can further comprise mixing the one or more viscosity modifier, one or more activator, one or more fungicide, one or more biocide, and/or one or more rust inhibitor with the mineral oil or one or more water soluble glycols prior to mixing the abrasive particles with the vehicle.

In another aspect, the invention generally relates to a method for using a concentrated abrasive slurry composition for a loose-abrasive machining process. The method comprises providing a concentrated slurry composition comprising at least 30 vol% abrasive particles and a vehicle comprising mineral oil or one or more water soluble glycols, the mineral oil or water soluble glycols are present in the concentrated abrasive slurry composition in amounts ranging from about 15 vol% to about 70 vol%, diluting the concentrated abrasive slurry with water and/or one or more water soluble glycol to form a working slurry, and supplying the working slurry to the loose-abrasive machining process.

In another aspect, the invention generally relates to a method for supplying an abrasive slurry composition to a loose-abrasive machining process comprising providing a concentrated abrasive slurry composition to a user, the concentrated abrasive slurry composition comprising at least 30 vol% abrasive particles and vehicle comprising between about 15 vol% and 70 vol% of mineral oil or one or more water soluble glycols, the abrasive particles being uniformly dispersed within the vehicle, diluting the concentrated abrasive slurry with water and/or one or more water soluble glycol or mineral oil to form a working slurry, and supplying the working slurry to the loose-abrasive machining process.

In another aspect, the invention generally relates to a method for preventing abrasive particles in a concentrated slurry composition comprising abrasive particles uniformly dispersed within a liquid vehicle from settling out for at least 30 days. The method comprises mixing at least 30 vol% abrasive particles with a vehicle comprising between about 15 vol% and 70 vol% of mineral oil or one or more water soluble glycols, and adding one or more viscosity modifiers in combination with one or more activators to the composition so as to adjust viscosity and improve yield stress of the composition.

Embodiments according to this aspect of the invention can include the following features. The one or more viscosity modifiers in combination with the one or more activator can be added in an amount that enables the viscosity modifier to set up a matrix in the vehicle, wherein the matrix increases yield stress and/or overall dynamic viscosity of the vehicle.

As should be understood, volume percents as referred herein with respect to a particular composition are based on total volume of that composition.

Other aspects and advantages of the invention will become apparent from the following description illustrating the principles of the invention by way of example only.

### DESCRIPTION

The slurry compositions provided by the present invention are suitable for use in various loose-abrasive machining processes including wire sawing, slurry based lapping and polishing, ultrasonic machining, water-jet cutting, and sandblasting. Such processes are suitable for cutting and machining a variety of materials including, but not limited to, silicon, semiconductor materials such as sapphire, GaAs, InP, and SiC, optical materials such as quartz glass and crystal, and hard and brittle materials such as ceramics. The disclosure to follow should be construed as illustrative rather than in a limiting sense. For example, while certain combinations of materials and concentrations may be provided, such combinations of materials and concentrations are based on wire saw cutting, and could be suitably modified for other types of loose-abrasive machining processes and for cutting and machining various materials.

The slurry compositions are provided to a customer in a concentrated state. When the customer wishes to use the slurry, the customer simply dilutes the concentrated slurry to its desired state for use in various loose-abrasive machining processes. This "diluted" state" for use in various loose-abrasive machining processes is sometimes referred to herein as the "working" slurry composition. By simply adding water and/or glycols or mineral oil to the concentrated slurry composition, a working slurry composition is provided which can be used for any loose-abrasive machining process. The amount of water, glycols, and mineral oil added to the concentrated slurry can be selected so as to provide a working slurry composition with customized cutting capabilities.

When referring to percentages of the various components herein, unless otherwise indicated, all percentages refer to volume % and are based on total volume of the concentrated slurry composition.

Conventional working slurry compositions typically contain from about 20% to about 28% solids by volume. "Solids", as used herein, is intended to refer to the abrasive particles. In embodiments of the present invention, the concentrated slurry compositions contain at least 30 vol% solids, and up to 80 vol% solids. In some embodiments, the concentrated slurry compositions contain from about 40 vol% to about 70 vol% solids, and in some embodiments from about 50 vol% to about 60 vol% solids.

Any conventional abrasive particles for use in slurry compositions can be used in the practice of the present invention and include, for example, silicon carbide (SiC), diamond, and boron carbide (B₄C). Generally, the abrasive particles for use in wire saw applications have a particle size ranging from about 6µm to about 20µm. In one embodiment, the abrasive particles are SiC particles.

The present slurries can be provided as either nonaqueous or water soluble slurries. Thus, the vehicles used in forming the concentrated slurry compositions can include mineral oil and water soluble glycols as components. In one embodiment, polyethylene glycol (PEG) is used.

In embodiments of the present invention, one or more water soluble glycol or mineral oil is present in the concentrated slurry compositions in an amount ranging from about 15% to about 70% by volume. In some embodiments, the glycols or mineral oil are present in the concentrated slurry compositions in an amount ranging from about 15 vol% to about 60 vol%, in some embodiments from about 20 vol% to about 50 vol%, and in some embodiments from about 30 vol% to about 40 vol%.

In some embodiments, the vehicle can also contain an amount of water. The addition of water can alter the viscosity of the compositions and can also enhance the ability of the compositions to dissipate heat during loose-abrasive machining. For example, as a wire saw cuts the workpiece, the water in the composition evaporates in the cutting zone, thereby dissipating heat and reducing heat related stress on the workpiece. Further, as water is evaporated, it can be easily replenished as needed. By reducing heat related stress on the workpiece and cut pieces, warpage of cut pieces and breakage during cutting will be reduced.

Thus, in certain embodiments, the amount of water contained in the concentrated slurry composition is an amount effective in altering the viscosity of the composition as desired. In some embodiments, the amount of water contained in the concentrated slurry composition is an amount effective in dissipating heat.

When added, water is contained in the concentrated slurry composition in amounts up to about 20% by volume. In some embodiments, the concentrated slurry compositions contain from about 2 vol% to about 15 vol% water, and in some embodiments from about 5 vol% to about 10 vol% water.

The viscosity of the concentrated slurry compositions can be altered by including one or more viscosity modifier in the vehicle. The viscosity modifiers can further contribute in preventing the solids from settling out, both before and after dilution of the concentrated slurry compositions. Any conventional viscosity modifiers for use in abrasive slurries can be used, including synthetic clays, natural clays, Carbopols® (also referred to as carbomer, and having a chemical formula of C₃H₄O₂), carboxymethylcellulose, ethylcellulose, gelatin, hydroxyethylcellulose, hydroxypropyl cellulose, methylcellulose, polyvinyl alcohol, and xanthan gum. One example of a synthetic clay useful in the practice of the present invention is Laponite®, a synthetic layered silicate (hydrous sodium lithium magnesium silicate).

In some embodiments, the viscosity modifiers can be added so as to provide a composition having a viscosity ranging from about 400 centipoise to about 10000 centipoise.

In some embodiments, one or more viscosity modifier can be contained in the concentrated slurry compositions in amounts up to about 5% by volume. In some embodiments, the concentrated slurry compositions contain from about 0.1 vol% to about 5 vol% of one or more viscosity modifier, in some embodiments from about 0.2 vol% to about 4 vol%, in some embodiments from about 0.3 vol% to 3 vol%, in some embodiments from about 0.4 vol% to about 2 vol%, and in some embodiments from about 0.5 vol% to about 1 vol%.

In some embodiments, one or more activator can be included in the vehicle. Any conventional activators can be used, including, but not limited to, amine borate and triethanolamine. The activators are generally used in conjunction with viscosity modifiers, but can be added with or without the addition of viscosity modifiers. The activator is generally added in an amount that will enable the viscosity modifier to set up a matrix in the fluid. This matrix will increase the yield stress or the overall dynamic viscosity of the fluid. Many activators, such as triethanolamine, provide additional benefits, such as corrosion inhibition, and may be used in excess of the amount need for activation of the viscosity modifier. In some embodiments, up to about 5% of one or more activator is added. These multi-functional activators may be used without a viscosity modifier when their additional benefits are desired.

In addition to mineral oil, water soluble glycols, water, viscosity modifiers, and activators, other conventional components can be provided in the vehicle including, but not limited to, fungicides, biocides, and rust inhibitors. In some embodiments, the concentrated slurry compositions can be provided without fungicides, biocides, and/or rust inhibitors, and one or more of these components can be subsequently added to the concentrated slurry compositions during dilution by the customer on site. For example, fungicides, biocides, and/or rust inhibitors can be added to the concentrated slurry compositions before, during, and/or after dilution by the customer.

One or more fungicides can be included in the concentrated slurry compositions so as to control fungi growth. Any conventional fungicides can be used and can be included in an amount that is effective in minimizing or controlling fungi growth. In some embodiments, one or more fungicide are contained in the concentrated slurry in amounts up to about 2 vol%. In some embodiments, the concentrated slurry compositions contain from about 0.02 vol% to about 2 vol% of one or more fungicide, in some embodiments from about 0.1 vol% to about 1.5 vol%, and in some embodiments from about 0.5 vol% to about 1 vol%.

To control bacterial growth, one or more biocides can be included in the concentrated slurry compositions. In some embodiments, the one or more biocides can further control fungi growth. These biocides can be selected from any conventional biocides used in loose-abrasive machining slurries, such as Bioban^{™} P-148, Grotan®, Kathon®, metal omadines or glutaraldehyde. Bioban^{™} P-148 is available from Dow Chemical Company and contains the two active ingredients 4-(2-nitrobutyl)-morpholine and 4,4'-(2-ethyl-2- nitrotrimethylene)dimorpholine. Grotan® is 2-[3,5-bis(2-hydroxyethyl)-1,3,5-triazinan-1-yl]ethanol, and has a chemical formula of C₉H₂₁N₃O₃. Kathon® is 2-octylthiazol-3-one, and has a chemical formula of C₁₁H₁₉NOS. Bioides can be added to the present concentrated slurry compositions in an amount that is effective in minimizing or controlling bacterial and, in some cases, fungal growth. Often a mixture of biocides is used to control both bacterial and fungal growth. In some embodiments, one or more biocide is contained in the concentrated slurry compositions in amounts up to about 2% by volume. In some embodiments, the concentrated slurry compositions contain from about 0.02 vol% to about 2 vol% of one or more biocide, on some embodiments from about 0.03 vol% to about 1.5 vol%, in some embodiments from about 0.04 vol% to about 1 vol%, and in some embodiments from about 0.05 vol% to about 0.09 vol%.

To inhibit corrosion of the loose-abrasive machining parts (e.g. the wires and wire saw), rust inhibitors can be included in the concentrated slurry compositions. The rust inhibitors can include any conventional rust inhibitors used in loose-abrasive machining slurries, such as triethanolamine. The rust inhibitors can be included in the concentrated slurry compositions amounts that effectively inhibit corrosion. In some embodiments, one or more rust inhibitor is contained in the concentrated slurry compositions in amounts up to about 5% by volume. In some embodiments, the concentrated slurry compositions contain from about 0.01 vol% to about 5 vol% of one or more rust inhibitor, in some embodiments from about 0.02 vol% to about 4.5 vol%, in some embodiments from about 0.03 vol% to about 4 vol%, in some embodiment from about 0.04 vol% to about 3.5 vol%, in some embodiments from about 0.05 vol% to about 3 vol%, in some embodiments from about 0.06 vol% to about 2.5 vol%, in some embodiments from about 0.07 vol% to about 2 vol%, in some embodiments from about 0.08 vol% to about 1.5 vol%, in some embodiments from about 0.09 vol% to about 1 vol%, and in some embodiments from about 0.1 vol% to about 0.5 vol%.

In one embodiment, the concentrated slurry composition contains silicon carbide abrasive particles, PEG, water, and one or more viscosity modifiers. In certain embodiments, the concentrated slurry contains 30 vol% SiC, 15-60 vol% PEG, up to 20 vol% water, up to 5 vol% of one or more viscosity modifier, up to 3 vol% of one or more activator, up to 2 vol% of one or more fungicide, up to 2 vol% of one or more biocide, and up to 5 vol% of one or more rust inhibitor. In an exemplary embodiment, the concentrated slurry contains about 34.11 vol% SiC, about 48.69 vol% PEG, about 15.28 vol% water, about 0.41 vol% synthetic clay, about 1.19 vol% activator, about 0.11 vol% biocide, and about 0.20 vol% rust inhibitor.

The present invention further provides methods for preparing concentrated slurry compositions. In accordance with the methods, abrasive particles are mixed with a vehicle such that the resulting composition contains at least 30 vol% solids. In some embodiments, the resulting composition contains from about 30 to about 80 vol% solids, in some embodiments from about 40 vol% to about 70 vol% solids, and in some embodiments from about 50 vol% to about 60 vol% solids. The abrasive particles and vehicle are mixed to provide a uniform dispersion of the abrasive particles in the vehicle. The abrasive particles and vehicle can be mixed by, for example, stirring, shaking, and any other conventional methods by which solid particles are mixed with and uniformly dispersed within a liquid vehicle.

In some embodiments, the vehicle comprises a water soluble glycol or mineral oil, and methods of the invention comprise dispersing abrasive particles within the water soluble glycol or mineral oil such that the resulting composition contains at least 30 vol% solids.

In some embodiments, the vehicle further comprises water, and methods of the invention comprise mixing water and a water soluble glycol or mineral oil to form a vehicle, and dispersing abrasive particles within the vehicle such that the resulting composition contains at least 30 vol% solids. In some embodiments, up to 20 vol% water is added.

In some embodiments, methods of the invention comprise adding one or more viscosity modifier to the concentrated slurry compositions. In one embodiment, the method comprises mixing a water soluble glycol or mineral oil with one or more viscosity modifiers and, optionally, water to form a vehicle, and dispersing abrasive particles within the vehicle such that the resulting composition contains at least 30 vol% solids. Methods can comprise adding one or more viscosity modifiers in an amount that provides the concentrated slurry with a particular viscosity. The viscosity modifiers can also help in preventing the solids from settling. For example, in some embodiments, up to about 5 vol% of one or more viscosity modifier is added.

In some embodiments, methods of the invention comprise adding one or more activator to the concentrated slurry compositions. In one embodiment, the method comprises mixing a water soluble glycol or mineral oil with one or more activator and, optionally, water and/or viscosity modifiers to form a vehicle, and dispersing abrasive particles within the vehicle such that the resulting composition contains at least 30 vol% solids. Activators can be added in an amount that activates the viscosity modifiers to give the desired viscosity. For example, in some embodiments, up to about 3% of one or more activator is added. In some embodiments, methods comprise adding one or more activator in conjunction with one or more viscosity modifiers. The one or more activators can be added in an amount that enables the viscosity modifier to set up a matrix in the fluid, with the matrix acting to increase the yield stress or the overall dynamic viscosity of the fluid.

In some embodiments, methods of the invention comprise adding one or more fungicide to the concentrated slurry compositions. In one embodiment, methods of the invention comprise mixing a water soluble glycol or mineral oil with one or more fungicide and, optionally, water, viscosity modifier, and/or activator to form a vehicle, and dispersing abrasive particles within the vehicle such that the resulting composition contains at least 30 vol% solids. The fungicides are generally added in an amount effective in minimizing and controlling fungi growth. For example, in some embodiments, up to about 2 vol% of one or more fungicide is added.

In some embodiments, methods of the invention comprise adding one or more biocide to the concentrated slurry compositions. In one embodiment, methods of the invention comprise mixing a water soluble glycol or mineral oil with one or more biocides and, optionally, water, viscosity modifier, activator, and/or fungicide to form a vehicle, and dispersing abrasive particles within the vehicle such that the resulting composition contains at least 30 vol% solids The biocides are generally added in an amount effective in minimizing and controlling bacterial growth. Some biocides are further effective in minimizing and controlling fungi growth and, thus, in such circumstances, one or more biocides can be added to effectively minimize and control both fungi and bacterial growth without requiring the addition of one or more fungicides to minimize and control fungi growth. In some embodiments, up to about 2 vol% of one or more biocide is added.

In some embodiments, methods of the invention comprise adding one or more rust inhibitor to the concentrated slurry compositions. In one embodiment, methods of the invention comprise mixing a water soluble glycol or mineral oil with one or more rust inhibitors, and, optionally water, viscosity modifiers, activators, fungicides, and/or biocides to form a vehicle, and dispersing abrasive particles within the vehicle such that the resulting composition contains at least 30 vol% solids. The rust inhibitors are generally added in an amount effective in inhibiting corrosion of the loose-abrasive machining apparatus that the slurries are used with (e.g. the wires and wire saw). For example, in some embodiments, up to about 5 vol% of one or more rust inhibitor is added.

The thus formed concentrated slurry compositions can then be delivered to a customer. The concentrated state and rheological properties of the present slurries are such that settling out of solids is prevented or minimized by increasing the viscosity of the slurry and/or by developing a yield stress. When a user wishes to use the slurry for a loose-abrasive machining process, the user simply converts the concentrated slurry to a working slurry by the addition of water and/or additional water soluble glycols. In the case of nonaqueous concentrated slurry compositions, for example those containing mineral oil, the concentrated slurry can be converted to a working slurry by additional mineral oil or other nonaqueous material.

The user can determine how much water, glycols, and mineral oil to add for dilution based on the desired solids concentration of the working slurry using simple calculations. In general, the desired solids concentration in working wire saw slurries ranges from about 20-28 vol% based on total volume of the working wire saw slurry. Thus, one can readily determine how much water and/or glycols or mineral oil must be added to obtain the desired working slurry solids concentration.

In applications wherein the concentrated slurry is diluted by adding additional water soluble glycols (alone or together with dilution by water), the glycols added to the concentrated slurry can be the same as the glycols contained in the concentrated slurry or can be different. For example, in one embodiment, the concentrated slurry contains PEG, and the concentrated slurry is diluted with PEG and/or water to provide a working wire saw slurry.

In some embodiments, about 20-50 vol% of water and/or glycol or mineral oil is added to the concentrated slurry compositions to provide a working wire saw slurry.

The concentrated slurry compositions can be provided with or without fungicides, biocides, and/or rust inhibitors. In embodiments wherein these components are not provided in the concentrated slurry, a user can add one or more of these materials to the concentrated slurry before, during, and/or after dilution with water and/or glycols or mineral oil.

The user mixes the concentrated slurry compositions, water and/or glycols or mineral oil, and any additional components (e.g. fungicide, biocide, rust inhibitor) to provide a uniform composition in which the solids are stably and uniformly dispersed using any conventional mixing methods such as simple stirring, shaking, or rolling.

The concentrated slurries of the present invention provide numerous advantages and benefits. The concentrated slurries have a higher solids content than pre-mixed slurries and, thus, provide a higher viscosity composition without requiring the use of undesirable amounts of viscosity modifiers. This higher solids content introduces a yield stress to the slurry and provides the concentrated slurry compositions with rheological properties that prevent the solids from settling out. Because only a portion of the total working slurry liquids volume is used to make the concentrated slurry, additional transportation costs are not required to ship the remaining liquids, which can be purchased by the customer locally, if desired. For aqueous slurry compositions, the water portion of the slurry will not have to be shipped, thereby reducing costs. Further, because the abrasive particles are provided in a concentrated state in the vehicle, and because settling out of the particles does not occur, the abrasive particles have sufficient time for complete wetting (handling, transportation and storage time), which improves overall performance of the resulting working slurry compositions.

The contents of all cited references (including literature references, issued patents, published patent applications) as cited throughout this application are hereby expressly incorporated by reference. The practice of the present invention will employ, unless otherwise indicated, conventional techniques, which are within the skill of the art. Such techniques are explained fully in the literature.

The following non-limiting example is illustrative of the invention.

### EXAMPLE 1

A slurry composition is prepared by mixing 48.69 vol% PEG, 34.11 vol% JIS 1200 silicon carbide, 0.26 vol% Laponite, 1.1 vol% amine borates. 0.1 vol% Bioban P-1487, 0.54 vol% triethanolamine and 15.28 vol% DI water. The slurry has the following characteristics:
Density: 1.81 g/ml
Viscosity: 1350 centipoise, measured by Brookfield spindle #4 at 60 rpm at 25°C.
Conductivity: 12.7µs
pH: 9.78

Water was then added to this slurry concentrate to provide a slurry composition having about 22 vol% solids.

The slurry was used to slice a 125mmX125mm polycrystalline ingot into 250 µm thick-wafers in a wire saw.

## Claims

1. A concentrated abrasive slurry composition comprising:
at least 30 vol% abrasive particles, the abrasive particles having an average particle size of up to about 3000 nm; and a vehicle comprising mineral oil or one or more water soluble glycols, the mineral oil or water soluble glycols being present in the concentrated abrasive slurry composition in amounts ranging from about 15 vol% to about 70 vol%.

2. The composition of claim 1, wherein the abrasive particles are uniformly dispersed within the vehicle.

3. The composition of claim 2 wherein the abrasive particles remain uniformly dispersed within the vehicle without settling out for at least 30 days.

4. The composition of claim 1, wherein the abrasive particles are selected from silicon carbide, alumina, diamond, and boron carbide.

5. The composition of claim 1, wherein the composition contains from about 30 vol% to about 80 vol% abrasive particles, preferably from about 40 vol% to about 70 vol% abrasive particles, more preferably from about 50 vol% to about 60 vol% abrasive particles.

6. The composition of claim 1, wherein the vehicle comprises polyethylene glycol.

7. The composition of claim 1, wherein the vehicle further comprises up to about 20 vol% water.

8. The composition of claim 1, wherein the vehicle further comprises:
one or more viscosity modifier selected from synthetic clay, natural clay, Carbopols, carboxymethylcellulose, ethylcellulose, gelatin, hydroxyethylcellulose, hydroxypropyl cellulose, methylcellulose, polyvinyl alcohol, and xanthan gum; one or more activator selected from amine borate and triethanolamine; one or more fungicide; one or more biocide; and/or one or more rust inhibitors.

9. The composition of claim 1, comprising at least 30 vol% SiC, 15- 60 vol% PEG, up to 20 vol% water, up to 5 vol% of one or more viscosity modifier, up to 3 vol% of one or more activator, up to 2 vol% of one or more fungicide, up to 2 vol% of one or more biocide, and up to 5 vol% of one or more rust inhibitor.

10. The composition of claim 1, wherein the abrasive particles have an average particle size of up to about 2000 nm, preferably up to about 1500 nm, preferably up to about 1000 nm, preferably up to about 800 nm, preferably up to about 750 nm, preferably up to about 600 nm, preferably up to about 500 nm, preferably up to about 400 nm, preferably up to about 300 run.

11. A method for forming a concentrated slurry composition comprising:
mixing at least 30 vol% abrasive particles, the abrasive particles having an average particle size of up to about 3000 nm, with a vehicle comprising between about 15 vol% and 70 vol% of mineral oil or one or more water soluble glycols.

12. The method of claim 11, wherein the abrasive particles are mixed with the vehicle such that they are uniformly dispersed within the vehicle, and such that the abrasive particles remain uniformly dispersed within the vehicle without settling out for at least 30 days.

13. The method of claim 12, wherein the vehicle further comprises one or more viscosity modifiers and/or one or more activators, wherein the one or more viscosity modifiers and/or one or more activators are mixed with the mineral oil or one or more water soluble glycols prior to mixing the abrasive particles with the vehicle.

14. The method of claim 11, wherein the vehicle comprises one or more water soluble glycols and further comprises water, and the method further comprises mixing water with the one or more water soluble glycols prior to mixing the abrasive particles with the vehicle.

15. A method for using a concentrated abrasive slurry composition in accordance with claim 1 for a loose-abrasive machining process comprising:
providing the concentrated abrasive slurry;
diluting the concentrated abrasive slurry with water and/or one or more water soluble glycol to form a working slurry; and
supplying the working slurry to the loose-abrasive machining process.

## Patentansprüche

1. Konzentrierte Schleifmittelaufschlämmungszusammensetzung, umfassend:
mindestens 30 Vol.-% Schleifteilchen, wobei die Schleifteilchen eine durchschnittliche Teilchengröße von bis zu etwa 3000 nm aufweisen;
und einen Träger, der Mineralöl oder ein oder mehrere wasserlösliche Glykole umfaßt, wobei das Mineralöl oder die wasserlöslichen Glykole in der konzentrierten Schleifmittelaufschlämmungszusammensetzung in Mengen im Bereich von etwa 15 Vol.-% bis etwa 70 Vol.-% vorliegen.

2. Zusammensetzung nach Anspruch 1, wobei die Schleifteilchen einheitlich in dem Träger dispergiert sind.

3. Zusammensetzung nach Anspruch 2, wobei die Schleifteilchen über einen Zeitraum von mindestens 30 Tagen ohne Absetzen einheitlich in dem Träger dispergiert bleiben.

4. Zusammensetzung nach Anspruch 1, wobei die Schleifteilchen unter Siliciumcarbid, Aluminiumoxid, Diamant und Borcarbid ausgewählt sind.

5. Zusammensetzung nach Anspruch 1, wobei die Zusammensetzung etwa 30 Vol.-% bis etwa 80 Vol.-% Schleifteilchen, vorzugsweise etwa 40 Vol.-% bis etwa 70 Vol.-% Schleifteilchen, weiter bevorzugt etwa 50 Vol.-% bis etwa 60 Vol.-% Schleifteilchen, enthält.

6. Zusammensetzung nach Anspruch 1, wobei der Träger Polyethylenglykol umfaßt.

7. Zusammensetzung nach Anspruch 1, wobei der Träger ferner bis zu etwa 20 Vol.-% Wasser umfaßt.

8. Zusammensetzung nach Anspruch 1, wobei der Träger ferner folgendes umfaßt:
einen oder mehrere Viskositätsmodifikatoren, ausgewählt unter synthetischem Ton, natürlichem Ton, Carbopolen, Carboxymethylcellulose, Ethylcellulose, Gelatine, Hydroxyethylcellulose, Hydroxypropylcellulose, Methylcellulose, Polyvinylalkohol und Xanthangummi; einen oder mehrere Aktivatoren, ausgewählt unter Aminborat und Triethanolamin; ein oder mehrere Fungizide; ein oder mehrere Biozide und/oder ein oder mehrere Rostinhibitoren.

9. Zusammensetzung nach Anspruch 1, umfassend mindestens 30 Vol.-% SiC, 15-60 Vol.-% PEG, bis zu 20 Vol.-% Wasser, bis zu 5 Vol.-% eines oder mehrerer Viskositätsmodifikatoren, bis zu 3 Vol.-% eines oder mehrerer Aktivatoren, bis zu 2 Vol.-% eines oder mehrerer Fungizide, bis zu 2 Vol.-% eines oder mehrerer Biozide und bis zu 5 Vol.-% eines oder mehrerer Rostinhibitoren.

10. Zusammensetzung nach Anspruch 1, wobei die Schleifteilchen eine mittlere Teilchengröße von bis zu etwa 2000 nm, vorzugsweise bis zu etwa 1500 nm, vorzugsweise bis zu etwa 1000 nm, vorzugsweise bis zu etwa 800 nm, vorzugsweise bis zu etwa 750 nm, vorzugsweise bis zu etwa 600 nm, vorzugsweise bis zu etwa 500 nm, vorzugsweise bis zu etwa 400 nm, vorzugsweise bis zu etwa 300 nm, aufweisen.

11. Verfahren zur Bildung einer konzentrierten Aufschlämmungszusammensetzung, bei dem man:
mindestens 30 Vol.-% Schleifteilchen, wobei die Schleifteilchen eine mittlere Teilchengröße von bis zu etwa 3000 nm aufweisen, mit einem Träger, der zwischen etwa 15 Vol.-% und 70 Vol.-% Mineralöl oder ein oder mehrere wasserlösliche Glykole umfaßt, mischt.

12. Verfahren nach Anspruch 11, bei dem man die Schleifteilchen so mit dem Träger mischt, daß sie in dem Träger einheitlich dispergiert werden, und so, daß die Schleifteilchen über einen Zeitraum von mindestens 30 Tagen ohne Absetzen einheitlich in dem Träger dispergiert bleiben.

13. Verfahren nach Anspruch 12, bei dem der Träger ferner einen oder mehrere Viskositätsmodifikatoren und/oder einen oder mehrere Aktivatoren umfaßt, wobei man den Viskositätsmodifikator bzw. die Viskositätsmodifikatoren und/oder den Aktivator bzw. die Aktivatoren vor dem Mischen der Schleifteilchen mit dem Träger mit dem Mineralöl oder dem wasserlöslichen Glykol bzw. den wasserlöslichen Glykolen mischt.

14. Verfahren nach Anspruch 11, bei dem der Träger ein oder mehrere wasserlösliche Glykole und ferner Wasser umfaßt und man bei dem Verfahren ferner vor dem Mischen der Schleifteilchen mit dem Träger Wasser mit dem wasserlöslichen Glykol bzw. den wasserlöslichen Glykolen mischt.

15. Verfahren zur Verwendung einer konzentrierten Schleifmittelaufschlämmungszusammensetzung nach Anspruch 1 für ein Verfahren zur maschinellen Bearbeitung mit losem Schleifmittel, bei dem man:
die konzentrierte Schleifmittelaufschlämmung bereitstellt;
die konzentrierte Schleifmittelaufschlämmung mit Wasser und/oder einem oder mehreren wasserlöslichen Glykolen zu einer Arbeitsaufschlämmung verdünnt und
die Arbeitsaufschlämmung dem Verfahren zur maschinellen Bearbeitung mit losem Schleifmittel zuführt.

## Revendications

1. Composition de boue abrasive concentrée comprenant :
au moins 30 % en volume de particules abrasives, les particules abrasives ayant une taille moyenne de particule jusqu'à environ 3 000 nm ; et un véhicule comprenant une huile minérale ou un ou plusieurs glycols hydrosolubles, l'huile minérale ou les glycols hydrosolubles étant présents dans la composition de boue abrasive concentrée dans des quantités d'environ 15 % en volume à environ 70 % en volume.

2. Composition selon la revendication 1, dans laquelle les particules abrasives sont dispersées uniformément dans le véhicule.

3. Composition selon la revendication 2, dans laquelle les particules abrasives restent dispersées uniformément dans le véhicule sans se déposer pendant au moins 30 jours.

4. Composition selon la revendication 1, dans laquelle les particules abrasives sont sélectionnées parmi le carbure de silicium, l'alumine, le diamant, et le carbure de bore.

5. Composition selon la revendication 1, la composition contenant d'environ 30 % en volume à environ 80 % en volume de particules abrasives, préférablement d'environ 40 % en volume à environ 70 % en volume de particules abrasives, plus préférablement d'environ 50 % en volume à environ 60 % en volume de particules abrasives.

6. Composition selon la revendication 1, dans laquelle le véhicule comprend du polyéthylène glycol.

7. Composition selon la revendication 1, dans laquelle le véhicule comprend en outre jusqu'à environ 20 % en volume d'eau.

8. Composition selon la revendication 1, dans laquelle le véhicule comprend en outre :
un ou plusieurs modificateurs de viscosité sélectionnés parmi l'argile synthétique, l'argile naturelle, les carbopols, la carboxyméthylcellulose, l'éthylcellulose, la gélatine, l'hydroxyéthylcellulose, l'hydroxypropylcellulose, la méthylcellulose, l'alcool polyvinylique, et la gomme xanthane ; un ou plusieurs activateurs sélectionnés parmi un borate d'amine et la triéthanolamine ; un ou plusieurs fongicides ; un ou plusieurs biocides ; et/ou un ou plusieurs produits antirouille.

9. Composition selon la revendication 1, comprenant au moins 30 % en volume de SiC, 15-60 % en volume de PEG, jusqu'à 20 % en volume d'eau, jusqu'à 5 % en volume d'un ou plusieurs modificateurs de viscosité, jusqu'à 3 % en volume d'un ou plusieurs activateurs, jusqu'à 2 % en volume d'un ou plusieurs fongicides, jusqu'à 2 % en volume d'un ou plusieurs biocides, et jusqu'à 5 % en volume d'un ou plusieurs produits antirouille.

10. Composition selon la revendication 1, dans laquelle les particules abrasives ont une taille moyenne de particule jusqu'à environ 2 000 nm, préférablement jusqu'à environ 1 500 nm, préférablement jusqu'à environ 1 000 nm, préférablement jusqu'à environ 800 nm, préférablement jusqu'à environ 750 nm, préférablement jusqu'à environ 600 nm, préférablement jusqu'à environ 500 nm, préférablement jusqu'à environ 400 nm, préférablement jusqu'à environ 300 nm.

11. Procédé de formation d'une composition de boue abrasive concentrée comprenant :
le mélange d'au moins 30 % en volume de particules abrasives, les particules abrasives ayant une taille moyenne de particule jusqu'à environ 3 000 nm, avec un véhicule comprenant d'environ 15 % en volume à 70 % en volume d'huile minérale ou un ou plusieurs glycols hydrosolubles.

12. Procédé selon la revendication 11, dans lequel les particules abrasives sont mélangées avec le véhicule de façon à être dispersées uniformément dans le véhicule, et de sorte que les particules abrasives restent dispersées uniformément dans le véhicule sans se déposer pendant au moins 30 jours.

13. Procédé selon la revendication 12, dans lequel le véhicule comprend en outre un ou plusieurs modificateurs de viscosité et/ou un ou plusieurs activateurs, lesdits un ou plusieurs modificateurs de viscosité et/ou un ou plusieurs activateurs étant mélangés avec l'huile minérale ou un ou plusieurs glycols hydrosolubles avant le mélange des particules abrasives avec le véhicule.

14. Procédé selon la revendication 11, dans lequel le véhicule comprend un ou plusieurs glycols hydrosolubles et comprend en outre de l'eau, et le procédé comprend en outre le mélange d'eau avec lesdits un ou plusieurs glycols hydrosolubles avant le mélange des particules abrasives avec le véhicule.

15. Procédé d'utilisation d'une composition de boue abrasive concentrée selon la revendication 1 pour un procédé d'usinage au moyen d'une suspension de particules abrasives, comprenant :
la fourniture de la boue abrasive concentrée ;
la dilution de la boue abrasive concentrée avec de l'eau et/ou un ou plusieurs glycols hydrosolubles pour former une boue de travail ; et
l'apport de la boue de travail dans le procédé d'usinage au moyen d'une suspension de particules abrasives.
